# EUROPEAN PATENT SPECIFICATION

(11) **EP 0 540 107 B1**
(45) Date of publication and mention of the grant of the patent: **30.08.1995**
(21) Application number: 92203290.9
(22) Date of filing: 27.10.1992
(51) Int. Cl.: F27B 7/20, C04B 7/43

(54) **Clinker production plant**
Klinkerproduktionanlage
Installation pour la production de clinker

(30) Priority: 31.10.1991 IT MI912907
(43) Date of publication of application: 05.05.1993
(73) Proprietor: Crosilla, Fabio, I-22060 Bulciago (Como) (IT)
(72) Inventor: Crosilla, Fabio, I-22060 Bulciago (Como) (IT)
(74) Representative: Fusina, Gerolamo

(56) References cited:
- DE-A- 1 508 510
- FR-A- 2 117 594
- FR-A- 2 367 712

## Description

This invention relates to a clinker production plant and in particular to a plant of the type substantially comprising, in sequence in the direction in which the material advances and in which the temperature changes, a grid-type preheater, a rotary kiln and a cooler.

In current kilns the preheater comprises a first and a second stage separated by a vertical baffle. The first and second stage are both divided horizontally by grid conveyor means of Lepol type on which the material being processed rests by gravity.

The first stage is therefore divided from the fluid-dynamic viewpoint into a first and a second sector located respectively above and below said grid conveyor means. The second stage is divided from the fluid-dynamic viewpoint into a third and a fourth sector located respectively below and above said grid conveyor means.

The first sector comprises a loading mouth for the material, which by gravity forms a layer on the grid means.

The second sector is connected from the fluid-dynamic viewpoint to the external environment.

The third and the first sector are connected together by a recirculation duct for gas flowing from said third to said first sector. This duct also usually comprises dust removal means.

The fourth sector is connected to the loading mouth of the rotary kiln into which the material is fed in counter-current with the combustion products, which are rich in alkalis and dust. In passing through the material and through the grid conveyor means, the combustion products cool by transferring heat to the material, which is thus preheated. The combustion products pass through the material and through the grid conveyors firstly from the fourth to the third sector, and then secondly via the recirculation duct from the third to the first sector.

By the effect of the temperature reduction in the combustion products, the previously gaseous alkalis condense into very fine powder and together with the dust they deposit partly on the material and partly in the grid conveyor means. That which deposits on the material re-enters the kiln and is added to that which is newly produced. During kiln operation there is therefore a continuous build-up in dust and alkalis which at full operation considerably limits the permeability of the grid conveyor and in certain cases can totally block gas passage through said conveyor.

A first current method for obviating this drawback is to give the grid conveyor a surface area greater than that nominally sufficient.

Besides being tendentially costly because it implies adequate dimensioning of the preheater and its accessories, this solution can be reasonably implemented only in the case of medium or small sized plants.

In addition, increases in the efficiency of the dust removal means included in the gas recirculation duct have not totally solved the problem. In this respect, the combustion products leaving the mouth of the kiln pass with their entire dust and alkali load through that part of the grid conveyor means which divides the fourth from the third sector.

A second method for preventing clogging of the grid conveyor means, and which is applied mainly to large sized plants, is to connect the fourth sector to a circuit for bleeding combustion products from the kiln mouth.

The flow which is bled off is cooled by addition of atmospheric air, after which the stream is cleaned and released to atmosphere.

In this manner a part of the dust and of the alkalis which could condense onto the grid conveyor means is eliminated to prevent their percentage reaching a value such as to inadmissibly reduce the efficiency of the preheater.

However by this means a substantial quantity of heat energy is released to atmosphere, so reducing the thermal efficiency of the plant, and in any event the clogging of the grid conveyor means is not eliminated but only controlled.

The object of the invention is to provide a clinker production plant which obviates the aforesaid drawbacks, ie a plant structured in such a manner as to substantially eliminate clogging of the grid conveyor means by removing from the plant gas the greatest possible quantity of dust and condensed alkalis without this resulting in reduction in the thermodynamic efficiency of the plant.

This object is attained by a plant in accordance with the first claim. A plant in accordance with the preamble of claim 1 is known from FR-A-2 367 712.

In this manner the gas contained in the third sector is used to cool the gas present in the fourth, and hence enable the cleaning means to operate. Although at a temperature less than the combustion products, the cleaned gas mixture contains a substantial heat energy which can be advantageously re-used to feed the first stage which operates at a lower temperature, so preserving the adiabatic state of the original plants and being more effective in preventing clogging of the grid means than those plants provided with the bleed circuit which discharges to atmosphere.

This more effective clogging prevention means that the surface along which heat transfer occurs within the preheater can be reduced, so that the area can be reduced for equal capacity of the surface of the grid means. Likewise, for equal heat transfer surface and hence equal size of the grid conveyor means the capacity of the plant can be increased, for example by providing it with a more powerful kiln or uprating the existing kiln with additional burners.

The invention is illustrated by way of non-limiting example in the figures of the accompanying drawings.

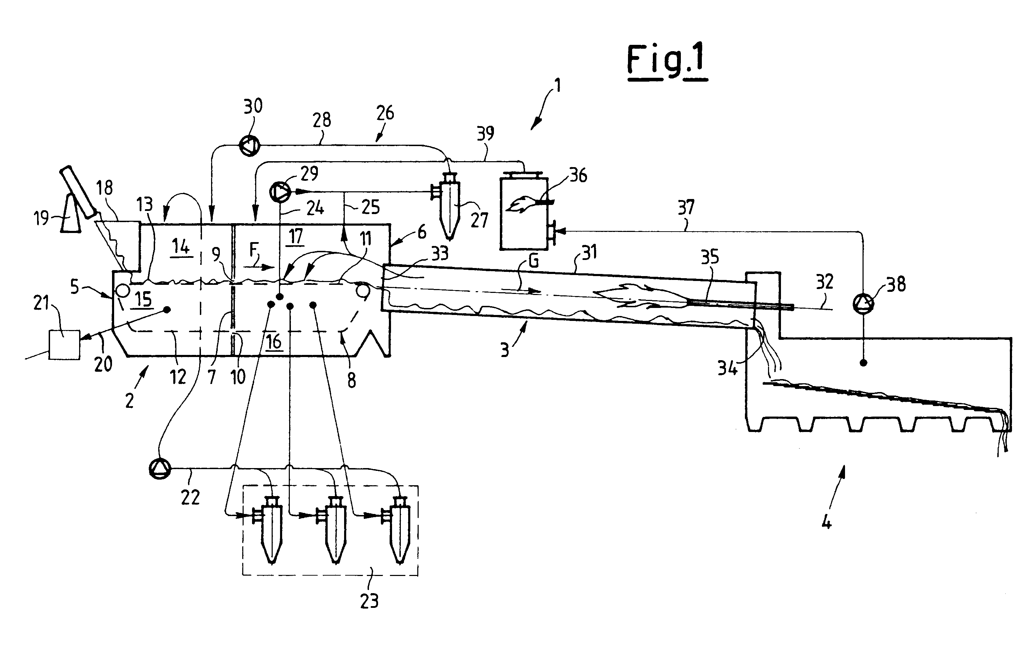

Figure 1 is a schematic sectional side view of a plant according to the invention; and

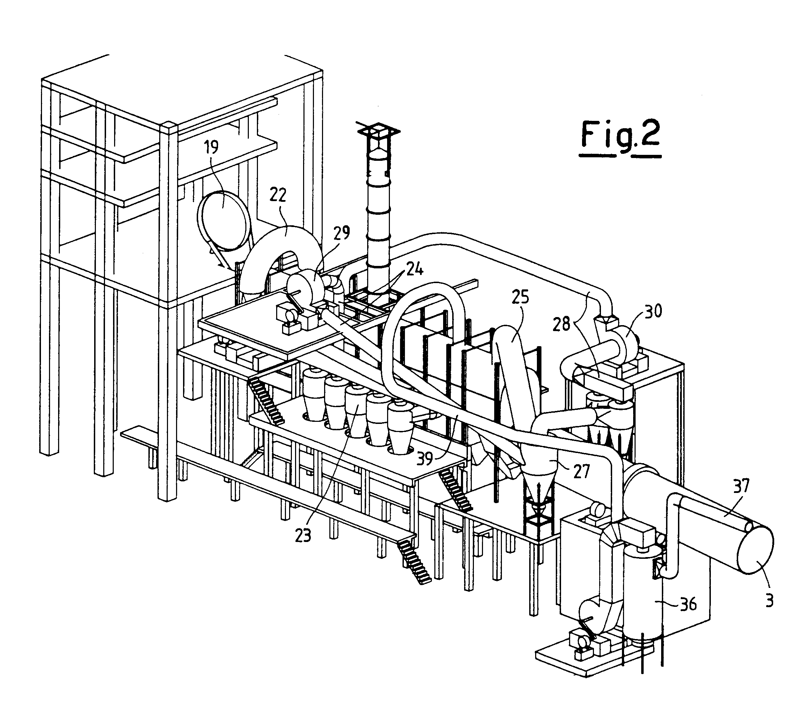

Figure 2 is a perspective view.

With reference to the said figures the plant of the invention, indicated overall by 1, comprises, in sequence in the direction in which the material advances and defined on the basis of material temperature changes, a preheater 2, a rotary kiln 3 and a cooler 4.

The preheater 2 comprises a first stage 5 and a second stage 6 separated by a vertical dividing baffle 7. The first stage 5 and the second stage 6 are traversed horizontally by grid conveyor means 8 preferably of the Lepol type, which pass (arrow F) through an upper aperture 9 and a lower aperture 10 provided in the baffle 7. More specifically, the upper branch 11 of the grid conveyor means 8 which supports the material 13 being processed passes through the upper aperture 9, whereas the lower branch passes through the lower aperture 10.

The vertical baffle 7 and the upper branch 11 divide the preheater from the fluid-dynamic viewpoint into four sectors. The first sector 14 is situated in the first stage above the upper branch 11. The second sector 15 is situated in the first stage below the upper branch 11. The third sector 16 is situated in the second stage 6 below the upper branch 11. The fourth sector 17 is situated in the second stage above the upper branch 11.

The first sector 14 comprises a loading mouth 18, upstream of which there are provided means 19 for loading the material 13 in its raw state. As is well known, the material when in the raw state is substantially in the form of granules so that it can be supported without loss by the grid conveyor means. The granules are prepared from a paste obtained by mixing powdered fossil components with 10% of water.

The second sector 15 is connected via a duct 20 to first dust removal means and then to atmosphere.

The third sector 16 is connected from the fluid-dynamic viewpoint to the first sector 14 by a recirculation duct 22. The recirculation duct 22 is provided with second dust removal means preferably consisting of a bank 23 of cyclones operating in parallel to remove the dust and alkalis.

The fourth sector 17 is connected to the loading mouth 33 of the kiln.

From the third sector 16 and fourth sector 17 there extend the first branch 24 and second branch 25 of a bleed circuit 26 which join together upstream of third dust removal means 27 consisting preferably of a cyclone. The exit duct 28 from the third dust removal means 27 terminates in the first sector 14. A first fan 29 and a second fan 30 are preferably provided along the ducts 24 and 28 respectively.

In a more economical alternative, the function performed by the third dust removal means 27 is performed by the cyclone bank 23.

For this, the gases from the third sector 16 and fourth sector 17 are mixed upstream of the cyclones 23. After dust removal or cleaning, the gas is fed to the first sector 14 via the recirculation duct 22.

The economy of this simplified alternative embodiment is mainly due to the fact that the fans 29 and 30 and the dust removal means 27 are not required.

The rotary kiln 3 comprises essentially a tubular element 31 rotating about its axis 32 and inclined so that the loading mouth 33 is at a higher level than the discharge mouth 34. The material 13 contained in it consequently moves in the direction of the arrow G. A main burner 35 is provided at the discharge mouth 34.

The cooler 4 is located downstream of the discharge mouth 34.

In the illustrated embodiment, there operates in parallel with the main burner a secondary burner 36 fed with air taken from the cooler 4 via a duct 37 provided with a fan 38.

The combustion products are fed into the fourth sector 17 through a duct 39. The use of the auxiliary burner 36 is possible precisely because of the constantly high gas permeability of the grid conveyor means 8, which are kept substantially free of dust and condensed alkalis by the cleaning action of the bleed circuit 26.

The plant operates as follows.

The loading means load the moist granular material through the loading mouth 18. The material is traversed by a gas stream at a temperature indicatively of 350°C. The gas cools to a temperature of about 100°C by transferring heat to the material, which dries.

The gas leaves through the duct 20. By the effect of the movement of the upper branch 11 of the grid means 8 in the direction of the arrow F, the material passes from the first sector 14 to the fourth sector 17. In the sector 17 the material 13 undergoes further preheating by the effect of the gas stream originating from the loading mouth 33 of the kiln 3 and having a temperature indicatively of 1000°C. This temperature is then reached by the material 13 within the tubular element 31 of the kiln. The material 13 leaves through the discharge mouth 34 at a temperature of 1000°C and is cooled in the cooler 4 from 1000°C to 100°C.

Simultaneously the recirculation duct 22 withdraws gas rich in dust and alkalis from the third sector 15 at a temperature indicatively variable between 200 and 400°C depending on the position of the withdrawal point. The temperature of this gas is indicatively 350°C downstream of the cyclones 23.

In the first branch 24 of the bleed circuit 26 the temperature is indicatively 250°C. In the second branch 25 it is indicatively 1000°C. After said first branch 24 and said second branch 25 join together the temperature is indicatively 600°C. In the duct 37 the gas temperature is indicatively 500°C whereas in the duct 39 it is indicatively 1100°C.

In other words, a so-called bleed circuit 26 is formed the purpose of which is to eliminate the maximum possible quantity of dust and alkalis before these pass through the grid conveyor means 8 of the preheater, to hence enable already clean gas to pass through the layer of granular material.

Consequently the effectiveness and efficiency of the entire firing plant are improved and remain substantially stable at a high level with the passage of time, these being considerable advantages considering that the plant hence operates without interruption, except for reasons of force majeure.

In this respect a substantial proportion of gas rich in dust and alkalis is withdrawn at the kiln loading mouth 33 (at about 1000°C) and mixed with gas at lower temperature (about 250°C) withdrawn from below the grid means 8. The mixture obtained (at about 600°C) is fed to a cyclone (or cyclone bank 27) which separates the dust and condensed alkalis from the gas, which hence cleaned is fed to the first stage 5, where in passing from its first sector 14 to its second sector 15 transfers heat to the layer of granular material 13, which consequently dries. The gas is then fed to an electrostatic precipitator 21 at a temperature of about 100°C. The gas quantity withdrawn at the kiln loading mouth 33 and hence not passing from the fourth sector 17 to the third sector 16 through the layer of granular material 13 is replaced by another hot gas stream (about 1000-1100°C) generated by the secondary burner, which uses combustion air at about 400-500°C taken from the cooler 4. In this manner a further heat recovery is obtained. In the total heat balance of the thus modified firing plant it should be noted that part of the fuel is burnt at low temperature (1000-1100°C) against the 1500-1600°C in the combustion at the kiln burner 35. NOₓ formation (which is known to be proportional to the combustion temperature) is consequently reduced per unit of clinker produced.

## Claims

1. A clinker production plant (1) of the type comprising, in sequence in the direction in which the material advances and defined on the basis of material temperature changes, at least one preheater (2), at least one rotary kiln (3) and at least one cooler (4), said preheater (2) comprising a first stage (5) and a second stage (6) through both of which grid conveyor means (8) pass, said first stage (5) being divided from the fluid-dynamic viewpoint into a first sector (14) and a second sector (15) located respectively above and below the grid conveyor means (8), said second stage (6) being divided from the fluid-dynamic viewpoint into a third sector (16) and a fourth sector (17) located respectively below and above the grid conveyor means (8), said first sector (14) comprising a loading mouth (18) for the material, said second sector (15) being connected from the fluid-dynamic viewpoint to atmosphere, said third sector (16) being connected from the fluid-dynamic viewpoint to said first sector (14) by a recirculation duct (22) for gas flowing from said third sector (16) to said first sector (14), said fourth sector (17) communicating with the entry mouth (33) of the kiln (3) and being connected to a bleed circuit (26) provided with dust removal/gas cleaning means (27) for the gas bled from said fourth sector (17), characterised in that said bleed circuit (26) is connected upstream of the dust removal/gas cleaning means (27) to the third sector (16) and downstream of the dust removal/gas cleaning means (27) to the first sector, the gas bled from said fourth sector (17) being cooled by mixing with gas bled from said third sector (16), said gas mixture being subjected to dust removal and cleaning, and fed into the first sector (14).

2. A plant as claimed in claim 1, characterised in that the dust removal and gas cleaning means of the bleed circuit (26) comprise at least one cyclone (27).

3. A plant as claimed in claim 1, characterised by comprising a secondary burner (36), the combustion air for which is taken from the interior of the cooler (4), and of which the combustion products are fed to the fourth sector (17).

4. A plant as claimed in claim 1, characterised in that the gas cleaning means of the recirculation duct (22) comprise a cyclone bank (23).

5. A plant as claimed in claim 4, characterised in that the cyclones of the bank (23) are connected in parallel.

## Patentansprüche

1. Klinkerproduktionsanlage (1) von der Art, die in Aufeinanderfolge in der Richtung, in welcher sich das Material vorwärtsbewegt und definiert auf der Basis der Materialtemperaturänderungen, wenigstens einen Vorerhitzer (2), wenigstens einen Drehbrennofen (3) und wenigstens einen Kühler (4) umfaßt, wobei der Vorerhitzer (2) eine erste Stufe (5) und eine zweite Stufe (6) umfaßt, durch welche beide Gitter- bzw. Rostfördermittel (8) hindurchgehen, wobei die erste Stufe (5) vom fluiddynamischen Gesichtspunkt her in einen ersten Sektor (14) und einen zweiten Sektor (15) unterteilt ist, der sich oberhalb bzw. unterhalb der Gitter- bzw. Rostfördermittel (8) befindet, wobei die zweite Stufe (6) vom fluiddynamischen Gesichtspunkt her in einen dritten Sektor (16) und einen vierten Sektor (17) unterteilt ist, der sich unterhalb bzw. oberhalb der Gitter- bzw. Rostfördermittel (8) befindet, wobei der erste Sektor (14) eine Beschickungsöffnung (18) für das Material umfaßt, der zweite Sektor (15) vom fluiddynamischen Gesichtspunkt her mit der Atmosphäre verbunden ist, der dritte Sektor (16) vom fluiddynamischen Gesichtspunkt her mit dem ersten Sektor (14) durch einen Rezirkulationskanal (22) für Gas, das von dem dritten Sektor (16) zu dem ersten Sektor (14) strömt, verbunden ist, der vierte Sektor (17) mit der Eintrittsöffnung (33) des Brennofens (3) in Verbindung steht und mit einem Abzapfkreislauf (26) verbunden ist, der mit Staubentfernungs-/Gasreinigungsmitteln (27) für das aus dem vierten Sektor (17) abgezapfte Gas versehen ist, dadurch **gekennzeichnet,** daß der Abzapfkreislauf (26) stromaufwärts von den Staubentfernungs-/Gasreinigungsmitteln (27) mit dem dritten Sektor (16) und stromabwärts von den Staubentfernungs-/Gasreinigungsmitteln (27) mit dem ersten Sektor verbunden ist, wobei das aus dem vierten Sektor (17) abgezapfte Gas durch Mischen mit aus dem dritten Sektor (16) abgezapftem Gas gekühlt wird, wobei die Gasmischung der Staubentfernung und Reinigung ausgesetzt und in den ersten Sektor (14) eingespeist wird.

2. Anlage nach Anspruch 1, dadurch **gekennzeichnet,** daß die Staubentfernungs- und Gasreinigungsmittel des Abzapfkreislaufs (26) wenigstens ein Zyklon (27) umfassen.

3. Anlage nach Anspruch 1, dadurch **gekennzeichnet,** daß sie einen zweiten Brenner (36) umfaßt, wobei die Verbrennungsluft für denselben aus dem Inneren des Kühlers (4) genommen wird, und dessen Verbrennungsprodukte dem vierten Sektor (17) zugeführt werden.

4. Anlage nach Anspruch 1, dadurch **gekennzeichnet,** daß die Gasreinigungsmittel des Rezirkulationskanals (22) eine Zyklonbank (23) umfassen.

5. Anlage nach Anspruch 4, dadurch **gekennzeichnet,** daß die Zyklone der Bank (23) parallel verbunden sind.

## Revendications

1. Ensemble (1) de production de mâchefer du type comprenant, successivement dans la direction dans laquelle le matériau avance et en prenant pour base les changements de la température du matériau, au moins un préchauffeur (2), au moins un fourneau rotatif (3) et au moins un refroidisseur (4), le préchauffeur (2) comprenant un premier étage (5) et un deuxième étage (6) à travers lesquels passent des moyens de transport à grille (8), le premier étage (5) étant divisé, du point de vue de la dynamique des fluides, en un premier secteur (14) et en un deuxième secteur (15) situés respectivement au-dessus et au-dessous des moyens de transport à grille (8), le deuxième étage (6) étant divisé, du point de vue de la dynamique des fluides, en un troisième secteur (16) et en un quatrième secteur (17) situés respectivement au-dessous et au-dessus des moyens de transport à grille (8), le premier secteur (14) comprenant un bouche de chargement (18) pour le matériau, le deuxième secteur (15) étant relié, du point de vue de la dynamique des fluides, à l'atmosphère, le troisième secteur (16) étant relié, du point de vue de la dynamique des fluides, au premier secteur (14) par une conduite de recirculation (22) destinée au gaz s'écoulant du troisième secteur (16) vers le premier secteur (14), le quatrième secteur (17) communiquant avec la bouche d'entrée (33) du fourneau (3) et étant relié à un circuit de purge (26) pourvu de moyens (27) de dépoussiérage/nettoyage du gaz pour le gaz évacué du quatrième secteur (17), caractérisé en ce que le circuit de purge (26) est relié, en amont des moyens (27) de dépoussiérage/nettoyage du gaz, au troisième secteur (16) et, en aval des moyens (27) de dépoussiérage/nettoyage du gaz, au premier secteur, le gaz évacué du quatrième secteur (17) étant refroidi en étant mélangé avec le gaz évacué du troisième secteur (16), ce mélange gazeux étant soumis à un dépoussiérage et à un nettoyage et amené dans le premier secteur (14).

2. Ensemble selon la revendication 1, caractérisé en ce que les moyens de dépoussiérage et de nettoyage du gaz du circuit de purge (26) comprennent au moins un cyclone (27).

3. Ensemble selon la revendication 1, caractérisé en ce que ce qu'il comprend un brûleur secondaire (36), pour lequel l'air de combustion est prélevé à l'intérieur du refroidisseur (4), et dont les produits de combustion sont amenés dans le quatrième secteur (17).

4. Ensemble selon la revendication 1, caractérisé en ce que les moyens de nettoyage du gaz de la conduite de recirculation (22) comprennent une rangée de cyclones (23).

5. Ensemble selon la revendication 4, caractérisé en ce que les cyclones de la rangée (23) sont reliés en parallèle.
